# EUROPEAN PATENT APPLICATION

(11) **EP 4 787 550 A1**
(43) Date of publication of application: **05.08.2026**
(21) Application number: 25869590.7
(22) Date of filing: 14.03.2025
(51) Int. Cl.: H01M 10/6556

(54) **THERMAL MANAGEMENT ASSEMBLY, THERMAL MANAGEMENT SYSTEM AND BATTERY PACK**

(30) Priority: 27.11.2024 CN 202422911373 U
(71) Applicant: Eve Energy Co., Ltd., Huizhou, Guangdong 516006 (CN)
(72) Inventor: ZHAO, Yuhang, Huizhou, Guangdong 516006 (CN); LI, Biqiang, Huizhou, Guangdong 516006 (CN); TANG, Jing, Huizhou, Guangdong 516006 (CN); HUANG, Minzhi, Huizhou, Guangdong 516006 (CN)
(74) Representative: Zhu, Puxing
(86) International application number: PCT/CN2025/082670
(87) International publication number: WO 2026/113186

(57) **Abstract**

The application provides a thermal management assembly, a thermal management system, and a battery pack. The thermal management assembly includes a first thermal management unit and a second thermal management unit of identical structure. The first thermal management unit includes a liquid inlet pipe assembly, a liquid outlet pipe assembly, and a plurality of thermal management components having flow channels. The liquid inlet pipe assembly and the liquid outlet pipe assembly respectively connects the liquid inlet of the flow channel to the liquid outlet of the flow channel. The thermal management components of the first thermal management unit and the thermal management components of the second thermal management unit are arranged alternately in sequence. The pipe assemblies are located at a same end of the thermal management components.

## Description

This application claims the priority to and benefit of Chinese Patent Application No. 202422911373.6, filed with China Patent Office on November 27, 2024, the entire contents of which are incorporated herein by reference.

### TECHNICAL FIELD

The present application relates to the technical field of batteries, and in particular to a pipeline connection structure, thermal management assembly and battery.

### BACKGROUND

To maintain the battery operating within a suitable temperature range, a thermal management system is required to raise or lower the battery temperature. In related technologies, a thermal management system includes pipelines, heat pipe components connected to the pipelines, and a temperature control module that regulates the temperature of the heat exchange medium in the pipelines. A plurality of heat pipe components are connected in parallel to the pipelines. The thermal management components are thermally coupled to the battery cells to control the temperature of the cells.

### SUMMARY

In the related art, the pipes connected to the thermal management components occupy a large space, which causes the thermal management system to occupy a large space in the battery pack, and has an adverse effect on the energy density of the battery pack.

In a first aspect, the present application provides a thermal management assembly, including a plurality of thermal management units, at least two of which are a first thermal management unit and a second thermal management unit; wherein each of the first thermal management unit and the second thermal management unit includes two pipe assemblies and a plurality of thermal management components; wherein the two pipe assemblies are respectively a liquid inlet pipe assembly and a liquid outlet pipe assembly; the plurality of thermal management components are sequentially spaced along a first direction; the plurality of thermal management components each have a flow channel provided with a liquid inlet and a liquid outlet; the liquid inlet pipe assembly connects the liquid inlets of the plurality of thermal management components, and the liquid outlet pipe assembly connects the liquid outlets of the plurality of thermal management components; wherein, in the first direction, the plurality of thermal management components of the first thermal management unit and the plurality of thermal management components of the second thermal management unit are arranged alternately in sequence; and pipe assemblies of the first thermal management unit and the pipe assemblies of the second thermal management unit are located at a same end of the plurality of thermal management components.

In a second aspect, the present application provides a thermal management system, including a liquid inlet pipe, a liquid outlet pipe, a temperature regulating module and the thermal management assembly mentioned above; the liquid inlet pipe is in connection with the liquid inlets of the at least two thermal management units; the liquid outlet pipe is in connection with the liquid outlets of the at least two thermal management units; two ports of the temperature regulating module are respectively connected to the liquid inlet pipe and the liquid outlet pipe, wherein the temperature regulating module is configured to regulate a temperature of heat exchange medium from the liquid outlet pipe and send regulated heat exchange medium to the liquid inlet pipe.

In a third aspect, the present application provides a battery pack, including: a housing, rows of battery cells and the thermal management system mentioned above; the housing has an installation cavity; the thermal management assembly, an end of the liquid inlet pipe close to the thermal management assembly, and an end of the liquid outlet pipe close to the thermal management assembly are all arranged in the installation cavity; the rows of battery cells are arranged alternately with the plurality of thermal management components along the first direction, and a row of battery cells are in contact with the thermal management component adjacent thereto.

### BENEFICIAL EFFECTS

In the application, the thermal management components of at least two thermal management units are arranged alternately, the pipe assemblies of at least two thermal management units are arranged at the same end of the thermal management components. This reduces the space occupied by the pipe assemblies and, consequently, the thermal management components. This reduces the space occupied by the thermal management system within the battery pack, thereby increasing the energy density of the battery pack.

### BRIEF DESCRIPTION OF THE DRAWINGS

FIG. 1 is a schematic structural diagram of a thermal management assembly according to an embodiment of the present application.
FIG. 2 is an enlarged view of portion A in FIG. 1.
FIG. 3 is a schematic diagram of the arrangements of the liquid inlet and liquid outlet of the thermal management component according to an embodiment of the present application.
FIG. 4 is a schematic diagram of the arrangement of pipe assemblies of two thermal management units according to an embodiment of the present application.
FIG. 5 is a schematic structural diagram of a thermal management component according to an embodiment of the present application.
FIG. 6 is a schematic structural diagram of a pipe assembly according to an embodiment of the present application.
FIG. 7 is a schematic structural diagram of a nozzle according to an embodiment of the present application.
FIG. 8 is a schematic structural diagram of a thermal management system according to an embodiment of the present application.
FIG. 9 is a schematic structural diagram of a battery according to an embodiment of the present application.

### Reference numerals:

1, thermal management assembly; 11a, first thermal management unit; 11b, second thermal management unit; 12a, liquid inlet pipe assembly; 12b, liquid outlet pipe assembly; 121, telescopic tube; 122, nozzle; 123, wedge block; 124, sealing ring; 125, conical surface;
13, thermal management component; 131, flow channel; 132, liquid inlet; 133, liquid outlet; 134, avoidance structure; 135, thermal management plate; 136, current collector;
2, thermal management system; 21, liquid inlet pipe; 22, liquid outlet pipe; 23, temperature regulation module;
3, battery pack; 31, row of battery cells; 311, battery cell.

### DETAILED DESCRIPTION OF THE EMBODIMENTS

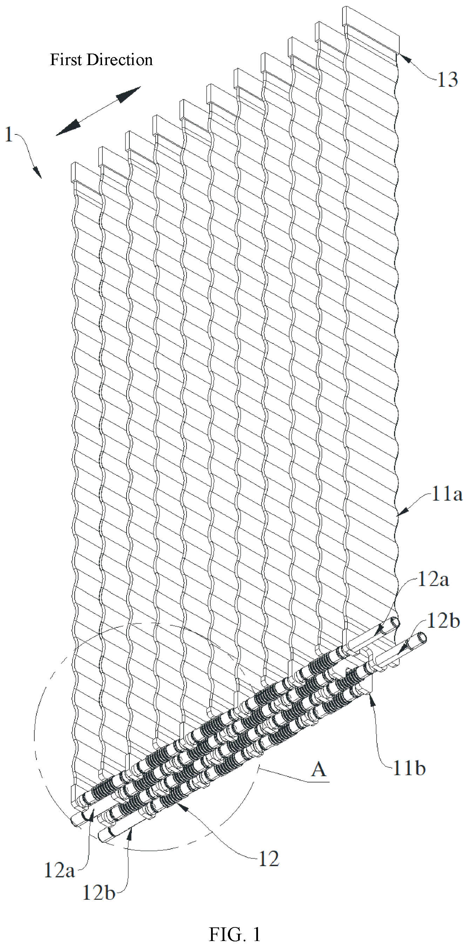

The following describes in detail a thermal management assembly, a thermal management system, and a battery pack according to embodiments of the present application in conjunction with FIGS. 1 to 9.

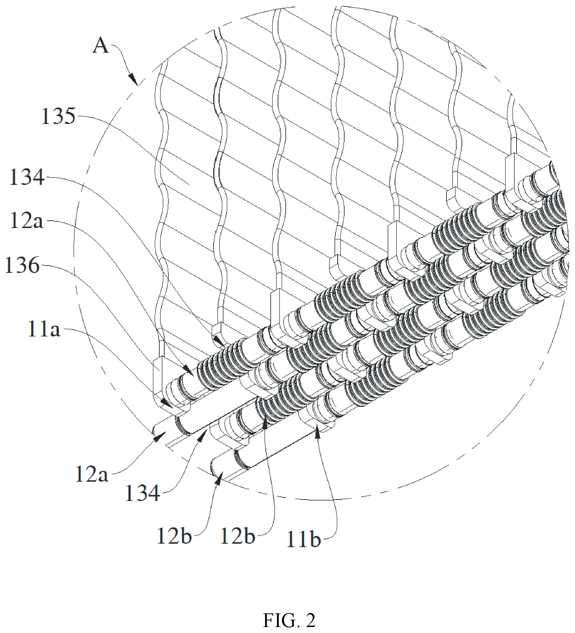

Please refer to FIGS. 1 and 2, in which FIG. 1 is a schematic structural diagram of a thermal management assembly 1 according to an embodiment of the present application, and FIG. 2 is an enlarged view of portion A in FIG. 1. An embodiment of the present application provides a thermal management assembly 1. The thermal management assembly 1 includes a plurality of thermal management units. At least two of the plurality of thermal management units are a first thermal management unit 11a and a second thermal management unit 11b. The first thermal management unit 11a includes two pipe assemblies and a plurality of thermal management components 13. The two pipe assemblies are a liquid inlet pipe assembly 12a and a liquid outlet pipe assembly 12b. The plurality of thermal management components 13 are arranged sequentially apart from each other along a first direction. The thermal management component 13 has a flow channel 131. The flow channel 131 is provided with a liquid inlet 132 and a liquid outlet 133. The liquid inlet pipe assembly 12a connects the liquid inlets 132 of the plurality of thermal management components 13, and the liquid outlet pipe assembly 12b connects the liquid outlets 133 of the plurality of thermal management components 13. The structure of the second thermal management unit 11b is identical to that of the first thermal management unit 11a. The thermal management component 13 of the first thermal management unit 11a and the thermal management component 13 of the second thermal management unit 11b are arranged alternately along the first direction. The pipe assemblies of the first thermal management unit 11a and the pipe assemblies of the second thermal management unit 11b are located at the same end of the thermal management components 13.

It will be appreciated that the liquid inlet pipe assembly 12a and the liquid outlet pipe assembly 12b of the first thermal management unit 11a and the liquid inlet pipe assembly 12a and the liquid outlet pipe assembly 12b of the second thermal management unit 11b are located at the same end of the thermal management components 13. Specifically, the liquid inlet pipe assembly 12a and the liquid outlet pipe assembly 12b of the first thermal management unit 11a and the liquid inlet pipe assembly 12a and the liquid outlet pipe assembly 12b of the second thermal management unit 11b can be arranged along the arrangement direction of the liquid inlets 132 and the liquid outlets 133, so that these pipe assemblies are stacked.

In this embodiment, by alternately arranging the thermal management components 13 of at least two thermal management units and positioning the pipe assemblies of at least two thermal management units at the same end of the thermal management components 13, the total space occupied by the pipe assemblies can be reduced, thereby reducing the space occupied by the thermal management assembly 1. This reduces the space occupied by the thermal management system within the battery, thereby improving the battery's energy density.

Furthermore, by alternately arranging the thermal management components 13 of at least two thermal management units, the spacing between adjacent interconnected thermal management components 13 can be increased, thereby increasing the space available for arranging the pipe assemblies. This reduces the difficulty of assembling the pipe assemblies and improves the ease of connecting the corresponding ports of the thermal management components 13 to the pipe assemblies. This improves the efficiency of assembling the pipe assemblies with the corresponding thermal management components 13, thereby increasing the assembly efficiency of the thermal management system 2.

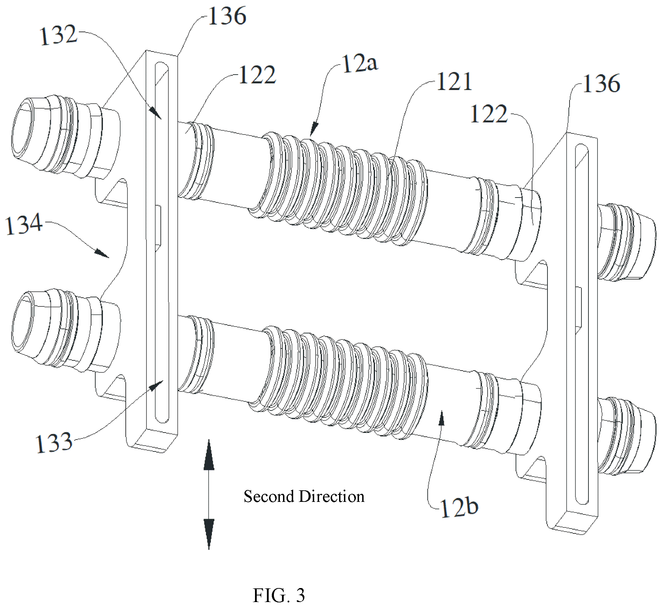

Please refer to FIG 3, which is a schematic diagram of the arrangements of the liquid inlet 132 and liquid outlet 133 of the thermal management component 13 according to an embodiment of the present application. In an embodiment, the liquid inlet 132 and the liquid outlet 133 of each thermal management component 13 are spaced apart along the second direction. The liquid inlet pipe assembly 12a and the liquid outlet pipe assembly 12b of the first thermal management unit 11a are spaced apart along the second direction. The liquid inlet pipe assembly 12a and the liquid outlet pipe assembly 12b of the second thermal management unit 11b are spaced apart along the second direction. The second direction is perpendicular to the arrangement plane of the thermal management components 13. Each thermal management component 13 is provided with an avoidance structure 134, and the avoidance structure 134 of each thermal management component 13 is for the pipe assembly 12 that is not connected thereto to be passed through.

Specifically, the pipe assembly of the first thermal management unit 11a is passed through the avoidance structure 134 of the second thermal management unit 11b, and the pipe assembly of the second thermal management unit 11b is passed through the avoidance structure 134 of the first thermal management unit 11a.

Optionally, the liquid inlet 132 of the first thermal management unit 11a, the liquid inlet 132 of the second thermal management unit 11b, the liquid outlet 133 of the first thermal management unit 11a, and the liquid outlet 133 of the second thermal management unit 11b are sequentially spaced apart along the second direction.

Correspondingly, the liquid inlet pipe assembly 12a of the first thermal management unit 11a, the liquid inlet pipe assembly 12a of the second thermal management unit 11b, the liquid outlet pipe assembly 12b of the first thermal management unit 11a, and the liquid outlet pipe assembly 12b of the second thermal management unit 11b are sequentially spaced apart along the second direction.

Exemplarily, the avoidance structure 134 may be a hole or an opening. Optionally, the avoidance structure 134 is an opening, as shown in FIG. 2.

In this embodiment, based on the above-mentioned arrangement, the liquid inlet pipe assemblies 12a and the liquid outlet pipe assemblies 12b of the two thermal management units can be arranged in alignment with each other in the second direction. In this way, the space occupied by the pipe assemblies of the two thermal management units can be reduced, thereby improving the compactness of the arrangements of the pipe assemblies of the thermal management assembly 1, which is conducive to reducing the space occupied by the thermal management system 2 and improving the space utilization of the battery pack 3.

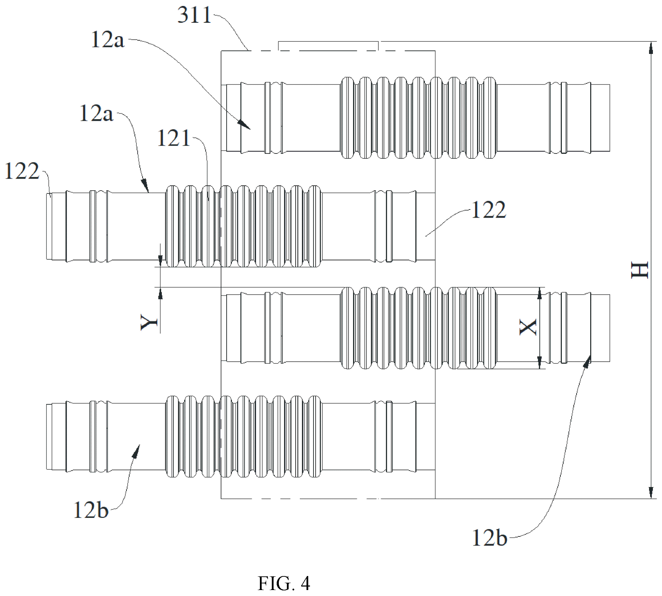

Please refer to FIG. 4, which is a schematic diagram of the arrangement of pipe assemblies 12 of two thermal management units according to an embodiment of the present application. In one embodiment, the outer diameter of the pipe assembly is X, and the spacing between two adjacent pipe assemblies along the first direction is Y, satisfying: 0.1X≤Y≤2X.

It will be understood that Y includes but is not limited to 0.1X, 0.2X, 0.3X, 0.4X, 0.5X, 0.7X, 0.8X, 1X, 1.1X, 1.2X, 1.4X, 1.5X, 1.6X, 1.8X, 1.9X, and 2X.

In this embodiment, based on the above-mentioned limitations, the installation feasibility and ease of assembly of the thermal management system can be guaranteed, while the spacing being too large to affect the connection between the pipe assemblies and the thermal management component 13 can be avoided, and the arrangement height of the pipe assemblies in the second direction can be controlled so that the size of the thermal management system 2 is therefore controlled.

Referring to FIG. 4, in an embodiment, the thermal management assembly 1 is configured to manage the temperature of battery cells 311, wherein the axis of the battery cells 311 is parallel to the second direction. The height of the battery cells 311 is H, and the outer diameter of the pipe assembly is X, satisfying: 0.1H≤X≤0.25H.

It is understood that the height of the thermal management component 13 matches the height of the battery cells 311. Correspondingly, the diameter of the pipe assemblies needs to match the height of the thermal management component 13 to ensure that the flow channel 131 can smoothly flow in and out of the fluid through the pipe assemblies.

Based on this, in this embodiment, based on the above-mentioned limitations, each pipe assembly can have an appropriate size to meet the liquid inlet and discharge requirements of the thermal management component 13, and the design difficulty and manufacturing difficulty of the connection part between the pipe assemblies and the thermal management component 13 can be reduced, thereby improving the assembly efficiency of the thermal management system 2.

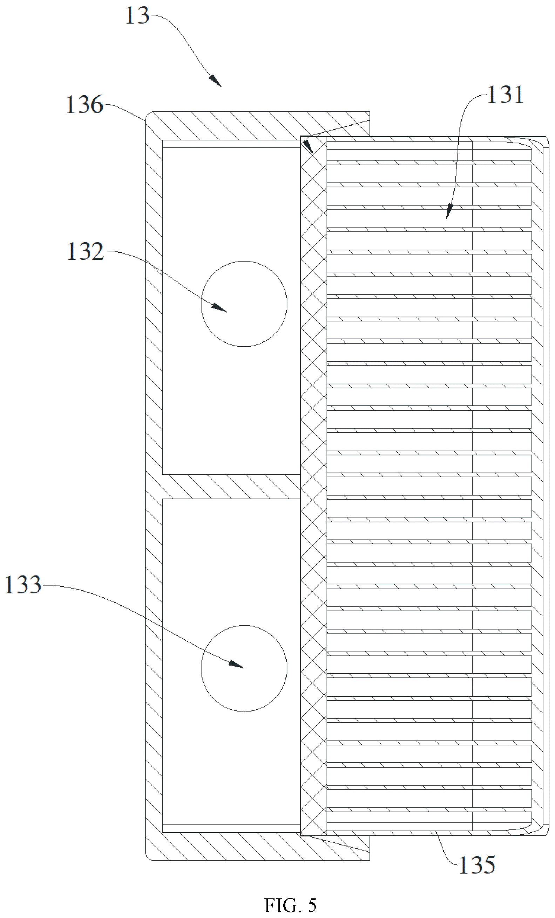

Please refer to FIG. 5, which is a schematic structural diagram of a thermal management component 13 according to an embodiment of the present application. In an embodiment, the flow channel 131 has a U-shaped structure.

It will be appreciated that the thermal management component 13 includes a current collector 136 and a thermal management plate 135 connected to the current collector 136. A portion of the flow channel 131 is disposed on the thermal management plate 135, while another portion is disposed on the current collector 136. Specifically, the liquid inlet 132 and the liquid outlet 133 of the flow channel 131 are disposed on the current collector 136. The pipe assemblies are connected to the current collector 136.

In this embodiment, since the flow channel 131 has a U-shaped structure, the temperature uniformity of the same column of battery cells 311 can be improved by the thermal management component 13, thereby improving the performance consistency of each battery cell 311 and further improving the reliability of the battery 3.

Referring to FIGS. 1 and 2, in an embodiment, the liquid inlet pipe assembly 12a includes a plurality of liquid inlet pipe components 12c. The liquid outlet pipe assembly 12b includes a plurality of liquid outlet pipe components 12d. One liquid inlet pipe component 12c and one liquid outlet pipe component 12d are disposed between every two adjacent thermal management components 13. The liquid inlet pipe component 12c connects the liquid inlets 132 of the two adjacent thermal management components 13. The liquid outlet pipe component 12d connects the liquid outlets 133 of the two adjacent thermal management components 13.

It can be understood that, compared with the structure using a long pipe to connect the plurality of liquid inlets 132 and plurality of liquid outlets 133, in this embodiment, the plurality of liquid inlets 132 and the plurality of liquid outlets 133 are respectively connected by the plurality of liquid inlet pipe components 12c and the plurality of liquid outlet pipe components 12d, which can reduce the difficulty of connecting the pipe assemblies and the thermal management component 13, thereby improving the ease of assembly between the pipe assemblies and the thermal management component 13, and facilitating the improvement of the sealing between the pipe assemblies and the thermal management component 13, so as to effectively prevent leakage of the heat exchange medium.

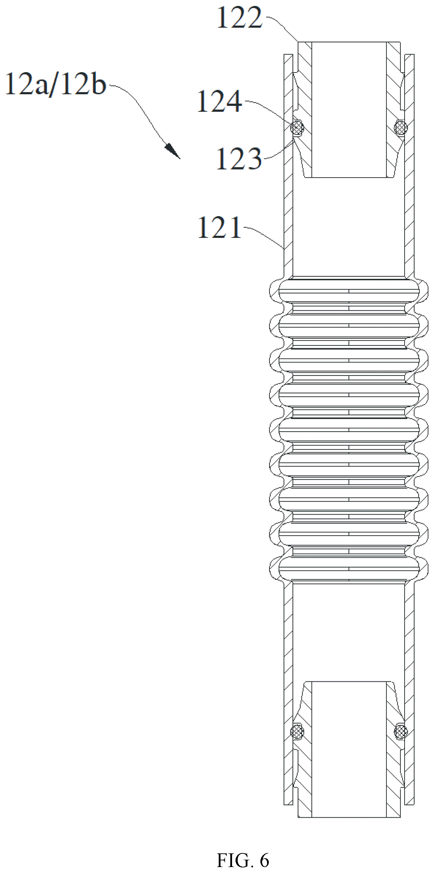

Please refer to FIG. 6, which is a schematic structural diagram of a pipe assembly 12 according to an embodiment of the present application. In one embodiment, the liquid inlet pipe component 12c includes a telescopic tube 121 and two nozzles 122. The two nozzles are connected to the ends of the telescopic tube 121 respectively. The ends of the two nozzles 122 facing away from the telescopic tube 121 are connected to the liquid inlets 132 of the flow channel 131 of the corresponding thermal management component 13. The structure of the liquid outlet pipe component 12d is similar to that of the liquid inlet pipe component 12c. The two nozzles 122 of the liquid outlet pipe component 12d are connected to the liquid outlets 133 of the corresponding thermal management component 13.

In this embodiment, based on the above configuration, assembly tolerances and material tolerances can be fixed due to the retractability and bendability of the telescopic tube 121, thereby reducing assembly difficulty and improving assembly efficiency.

Furthermore, since the assembly tolerances and material tolerances can be fixed by using the telescopic tube 121, the stress state of related components can be improved, thereby improving the connection reliability of related components and further improving the reliability of the thermal management system 2.

Specifically, the telescopic tube 121 may be a corrugated tube, a rubber telescopic tube 121, or a plastic telescopic tube 121 made of plastic materials such as polyethylene and polypropylene.

Referring to FIG. 6, in an embodiment, the telescopic tube 121 is a bellows, and one end of the nozzle 122 is inserted into and in interference fit with the telescopic tube 121. This provides the pipe assembly with excellent flexibility, bendability, and corrosion resistance, and can withstand high pressures and temperatures while providing minimal resistance to fluid, ensuring smooth fluid transmission.

Specifically, the telescopic tube 121 is a nylon bellows, so that the telescopic tubes 121 which has a small number of types can be selected as the main body of the pipe assemblies, thereby facilitating material standardization of the pipe assemblies and facilitating maintenance.

Optionally, the material of the nylon bellows may be one of the following materials: A12/PA12 (polylaurolactam), PP (polypropylene), TIE/PA11 (nylon 11).

Referring to FIG. 6, in an embodiment, a wedge block 123 is provided on the outer circumferential surface of the nozzle 122. The wedge-shaped surface of the wedge block 123 faces the telescopic tube 121. The wedge block 123 extends in a ring shape along the circumference of the nozzle 122. The wedge block 123 is located within the telescopic tube 121 and forms an interference fit with the inner wall of the telescopic tube 121. This not only guides the insertion of the nozzle 122 into the telescopic tube 121, improving assembly efficiency, but also increases the interference fit between the telescopic tube 121 and the nozzle 122, thereby improving the sealing between the telescopic tube 121 and the nozzle 122.

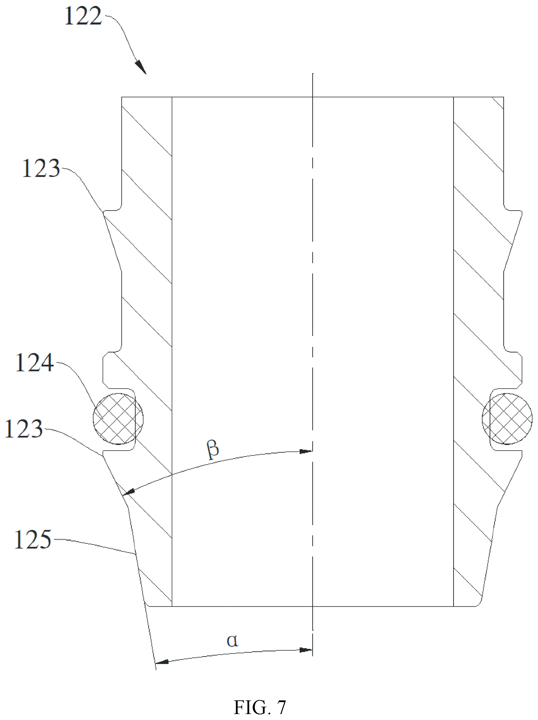

Please refer to FIG. 7, which is a schematic structural diagram of a nozzle 122 according to an embodiment of the present application. In an embodiment, each nozzle 122 is provided with two wedge blocks 123. The two wedge blocks 123 are spaced apart along the axial direction of the nozzle 122. This improves the sealing between the telescopic tube 121 and the nozzle 122.

It can be understood that the liquid inlet pipe component 12c also includes a sealing ring 124. In the liquid inlet pipe component 12c, the sealing ring 124 is sleeved on the nozzle 122 and located between the nozzle 122 and the telescopic tube 121. The liquid outlet pipe component 12d has the same structure as that of the liquid inlet pipe component 12c.

Please refer to FIG. 7, in an embodiment, the outer circumferential surface of one end of the nozzle 122 inserted into the telescopic tube 121 is a conical surface 125. The small-diameter end of the conical surface 125 is connected to the end surface of the nozzle 122 inserted into the telescopic tube 121. The large-diameter end of the conical surface 125 is connected to the small-diameter end of the wedge-shaped surface; wherein, the angle α between the conical surface 125 and the axis of the nozzle 122 is smaller than the angle β between the wedge-shaped surface and the axis of the nozzle 122. In this way, not only can the conical surface 125 guide the connection between the nozzle 122 and the telescopic tube 121 to improve the smoothness of the connection, but the conical surface 125 can also smoothly transition the interference fit between the nozzle 122 and the telescopic tube 121 to improve the smoothness and ease of operation of the interference fit.

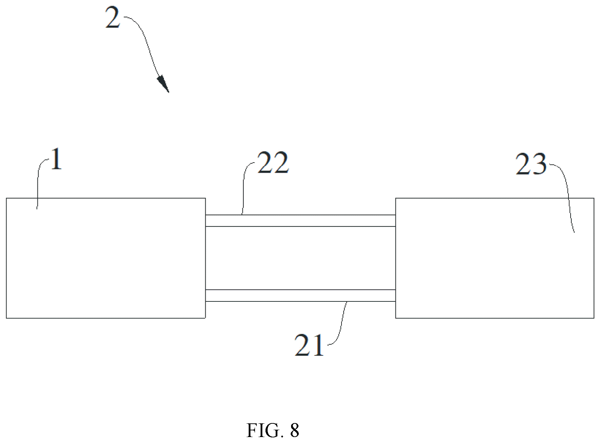

Please refer to FIG. 8, which is a schematic structural diagram of a thermal management system 2 according to an embodiment of the present application. An embodiment of the present application provides a thermal management system 2. The thermal management system 2 includes a liquid inlet pipe 21, a liquid outlet pipe 22, a temperature regulation module 23, and a thermal management assembly 1 provided in embodiments of the present application. The liquid inlet pipe 21 is connected to the liquid inlets 132 of at least two thermal management units. The liquid outlet pipe 22 is connected to the liquid outlets 133 of at least two thermal management units. The two ports of the temperature regulation module 23 are respectively connected to the liquid inlet pipe 21 and the liquid outlet pipe 22. The temperature regulation module 23 is configured to regulate the temperature of the heat exchange medium from the liquid outlet pipe 22 and send the regulated heat exchange medium to the liquid inlet pipe 21.

It is understandable that the temperature regulation module 23 may include a compressor, a condenser, an evaporator, etc. connected by pipelines, and be configured with a valve to achieve cooling or heating of the battery cells 311.

In this embodiment, based on the thermal management assembly 1 provided in some embodiments of the present application, the pipe assemblies 12 of at least two thermal management units are located at the same end of the thermal management components 13, thereby reducing the total space occupied by the pipe assemblies and, in turn, the space occupied by the thermal management assembly 1. This reduces the space occupied by the thermal management system 2 within the battery, thereby improving the battery's energy density.

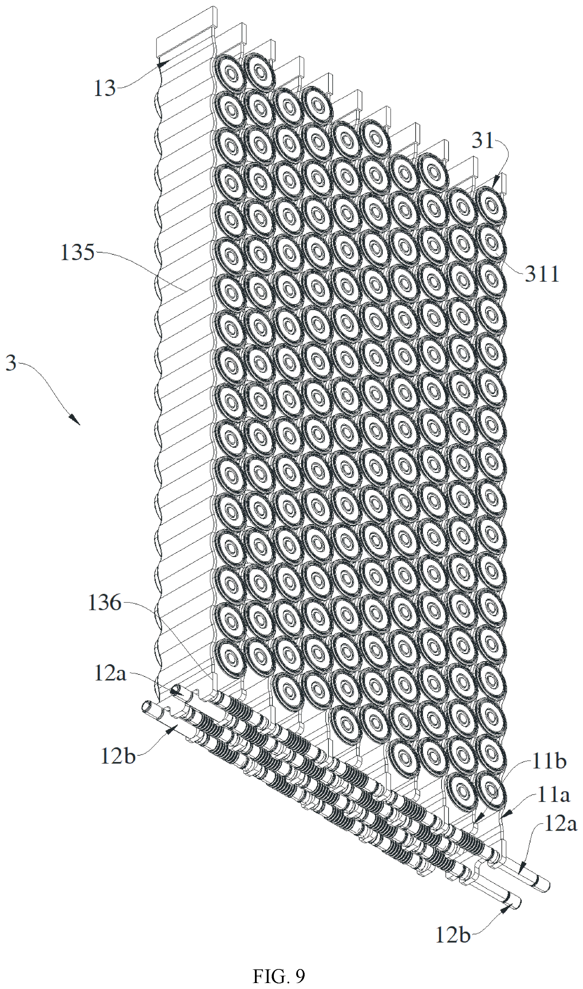

Please refer to FIG. 9, which is a schematic structural diagram of a battery 3 according to an embodiment of the present application. The embodiments of the present application provide a battery pack 3. The battery pack 3 includes a housing, rows of battery cells 31, and a thermal management system 2 provided in some embodiments of the present application. The housing has an installation cavity. The thermal management assembly 1, the end of the liquid inlet pipe 21 close to the thermal management assembly 1, and the end of the liquid outlet pipe 22 close to the thermal management assembly 1 are all arranged in the installation cavity. The battery cell 311 are arranged in several rows 31. The rows of battery cell 311 are arranged alternately in sequence with the plurality of thermal management components 13 along the first direction. Each row of battery cells 311 are in contact with the thermal management components 13 adjacent to them.

The battery cells 311 are cylindrical cells. The thermal management plate 135 of the thermal management component 13 is a serpentine plate that contacts the cylindrical surfaces of the battery cells 311, thereby increasing the contact area between the thermal management plate 135 and the battery cells 311 and improving the thermal management efficiency.

In this embodiment, based on the thermal management system 2 provided in some embodiments of the present application, the pipe assemblies 12 of at least two thermal management units are located at the same end of the thermal management components 13, thereby reducing the total space occupied by the pipe assemblies 12. This reduces the space occupied by the thermal management system within the battery pack 3, thereby facilitating an increase in the energy density of the battery pack 3.

## Claims

1. A thermal management assembly (1), comprising a plurality of thermal management units, at least two of which are a first thermal management unit (11a) and a second thermal management unit (11b);
wherein the first thermal management unit (11a) comprises two pipe assemblies and a plurality of thermal management components (13); wherein the two pipe assemblies are respectively a liquid inlet pipe assembly (12a) and a liquid outlet pipe assembly (12b); the plurality of thermal management components (13) are sequentially spaced along a first direction; the plurality of thermal management components (13) each have a flow channel (131) provided with a liquid inlet (132) and a liquid outlet (133); the liquid inlet pipe assembly (12a) connects the liquid inlets (132) of the plurality of thermal management components (13), and the liquid outlet pipe assembly (12b) connects the liquid outlets (133) of the plurality of thermal management components (13);
wherein the first thermal management unit (11a) and the second thermal management unit (11b) have a same structure;
wherein, in the first direction, the plurality of thermal management components (13) of the first thermal management unit (11a) and the plurality of thermal management components (13) of the second thermal management unit (11b) are arranged alternately in sequence; and pipe assemblies of the first thermal management unit (11a) and the pipe assemblies of the second thermal management unit (11b) are located at a same end of the plurality of thermal management components (13).

2. The thermal management assembly (1) according to claim 1, wherein the liquid inlet (132) and the liquid outlet (133) of each of the plurality of thermal management component (13) are spaced apart along a second direction; the liquid inlet pipe assembly (12a) and the liquid outlet pipe assembly (12b) of the first thermal management unit (11a) are spaced apart along the second direction; and the liquid inlet pipe assembly (12a) and the liquid outlet pipe assembly (12b) of the second thermal management unit (11b) are spaced apart along the second direction;
wherein the second direction is perpendicular to a plane where the plurality of thermal management components (13) are arranged;
wherein each of the plurality of thermal management components (13) is provided with a avoidance structure (134), pipe assemblies of the first thermal management unit (11a) is passed through the avoidance structure (134) of the second thermal management unit (11b), and pipe assemblies of the second thermal management unit (11b) is passed through the avoidance structure (134) of the first thermal management unit (11a).

3. The thermal management assembly (1) according to claim 2, wherein an outer diameter of each pipe assembly is X, and a distance between two adjacent pipe assemblies in the first direction is Y, which satisfy: 0.1X≤Y≤2X.

4. The thermal management assembly (1) according to claim 2, wherein the thermal management assembly (1) is configured to manage a temperature of battery cells (311), an axis of the battery cells (311) is parallel to the second direction, a height of the battery cells (311) is H, an outer diameter of each pipe assembly is X, which satisfy: 0.1H ≤ X < 0.25H.

5. The thermal management assembly (1) according to any one of claims 1 to 4, wherein the flow channel (131) has a U-shaped structure.

6. The thermal management assembly (1) according to any one of claims 1 to 4, wherein each liquid inlet pipe assembly (12a) comprises a plurality of liquid inlet pipe components (12c), and each liquid outlet pipe assembly (12b) comprises a plurality of liquid outlet pipe components (12d), and one of the plurality of liquid inlet pipe components (12c) and one of the plurality of liquid outlet pipe components (12d) are provided between every two adjacent thermal management components (13), wherein the liquid inlet pipe component (12c) connects the liquid inlets (132) of the two adjacent thermal management components (13), and the liquid outlet pipe component (12d) connects the liquid outlets (133) of the two adjacent thermal management components (13).

7. The thermal management assembly (1) according to claim 6, wherein the liquid inlet pipe component (12c) and the liquid outlet pipe component (12d) each comprises a telescopic pipe (121) and two nozzles (122) connected to two ends of the telescopic pipe (121) respectively, wherein ends of the two nozzles (122) of the inlet pipe component (12c) facing away from the telescopic pipe (121) are respectively connected to the liquid inlets (132) of a corresponding one of the thermal management components (13);
the two nozzles (122) of the liquid outlet pipe component (12d) are respectively connected to the liquid outlets (133) of the corresponding thermal management components (13).

8. The thermal management assembly (1) according to claim 7, wherein each telescopic tube (121) is a bellows, and the corresponding two nozzles (122) are inserted into and in interference fit with the telescopic tube (121).

9. The thermal management assembly (1) according to claim 7, wherein at least one wedge block (123) is provided on an outer circumferential surface of each nozzle (122), a wedge surface of the wedge block (123) faces the telescopic tube (121), and the wedge block (123) extends in a ring shape along a circumference of the nozzle (122), and the wedge block (123) is located in the telescopic tube (121) and is in interference fit with an inner wall of the telescopic tube (121).

10. The thermal management assembly (1) according to claim 9, wherein each nozzle (122) is provided with the two wedge blocks (123) that are spaced apart along an axial direction of the nozzle (122).

11. The thermal management assembly (1) according to claim 9 or 10, wherein the outer circumferential surface of each nozzle (122) at an end thereof inserted into the telescopic tube (121) is a conical surface (125), a small-diameter end of the conical surface (125) is connected to an end surface of the nozzle (122) inserted into the telescopic tube (121), and a large-diameter end of the conical surface (125) is connected to a small-diameter end of the wedge surface;
wherein an angle between the conical surface (125) and an axis of the nozzle (122) is smaller than an angle between the wedge surface and the axis of the nozzle (122).

12. A thermal management system (2), comprising:
the thermal management assembly (1) according to any one of claims 1 to 11;
a liquid inlet pipe (21) in connection with the liquid inlets (132) of the at least two thermal management units;
a liquid outlet pipe (22) in connection with the liquid outlets (133) of the at least two thermal management units; and
a temperature regulating module (23), two ports of which are respectively connected to the liquid inlet pipe (21) and the liquid outlet pipe (22), wherein the temperature regulating module (23) is configured to regulate a temperature of heat exchange medium from the liquid outlet pipe (22) and send regulated heat exchange medium to the liquid inlet pipe (21).

13. A battery pack (3), comprising:
a housing, having an installation cavity;
the thermal management system (2) according to claim 12, wherein the thermal management assembly (1), an end of the liquid inlet pipe (21) close to the thermal management assembly (1), and an end of the liquid outlet pipe (22) close to the thermal management assembly (1) are all arranged in the installation cavity; and
rows (31) of battery cells (311) arranged alternately with the plurality of thermal management components (13) along the first direction, and a row (31) of battery cells (311) are in contact with the thermal management component (13) adjacent thereto.
